# EUROPÄISCHE PATENTSCHRIFT

(11) **EP 0 374 394 B1**
(45) Veröffentlichungstag und Bekanntmachung des Hinweises auf die Patenterteilung: **01.12.1993**
(21) Anmeldenummer: 89118561.3
(22) Anmeldetag: 06.10.1989
(51) Int. Cl.: B21D 53/84, B21D 39/20

(54) **Aufgebaute Welle**
Assembled shaft
Arbre composé

(30) Priorität: 17.12.1988 DE 3842590
(43) Veröffentlichungstag der Anmeldung: 27.06.1990
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE)
(74) Vertreter: COHAUSZ HASE DAWIDOWICZ & PARTNER

(56) Entgegenhaltungen:
- EP-A- 0 265 663
- EP-A- 0 290 758
- EP-A- 0 292 794
- EP-A- 0 292 795

## Beschreibung

Die Erfindung betrifft ein Verfahren zum Herstellen einer aufgebauten Welle, insbesondere Nockenwelle, Getriebewelle oder Kurbelwelle mit zumindest einem Rohrkörper und mehreren darauf mit Abstand zueinander durch in Längsabschnitten vollzogenes Aufweiten desselben kraftschlüssig festgelegten Elementen, wie Nocken, Zahnrädern, Lagerhülsen oder Kurbelwangen, bei der insbesondere jeweils zwischen zwei Elementen eine gegenüber dem Rohrkörper einen größeren Durchmesser aufweisende Hülse zwischen dem Rohrkörper und den Elementen eingespannt ist.

Wellen der genannten Art sind in der DE 38 03 683.5 der gleichen Anmelderin vorbeschrieben. Ihr Vorteil liegt in der guten Biege- und Torsionsfestigkeit aufgrund der zweischaligen Bauweise. Fertigungstechnisch haben diese Wellen den Vorteil, daß durch das Aufweiten des Rohrkörpers ausschließlich im Bereich der festzulegenden Elemente auf die Verwendung eines teuren Gesenks verzichtet werden kann. Dafür bedürfen sie besonderer Aufweitssonden, mit denen nur einzelne Längsabschnitte beaufschlagt werden können, bei denen immer noch Dichtungsprobleme auftreten. Bei Versagen einer von mehreren Dichtungen kann sich insgesamt kein Druck aufbauen. Da die Dichtungen eine nicht immer vorherbestimmbare und übereinstimmende Lebensdauer haben, ist die Prozeßsicherheit nicht immer ausreichend.

Aus der gattungsbildenden EP-A-0 292 795 ist es bereits bekannt, Antriebselemente, insbesondere Nocken, dadurch auf einer Hohlwelle zu befestigen, daß bestimmte Abschnitte derselben aufgeweitet, d. h. plastisch verformt werden.

Der Erfindung lag die Aufgabe zugrunde, ein Verfahren zur Herstellung einer gebauten Welle anzugeben, mit dem die Abdichtprobleme beim Aufweiten in einzelnen Längsabschnitten verringert sind.

Die erfindungsgemäße Lösung ergibt sich aus den Merkmalen des Patentspruchs 1.

In Patentanspruch 2 sind Maßnahmen einer zweckmäßigen Weiterbildung des Verfahrens angegeben.

Durch das erfindungsgemäße Verfahren ist es möglich, aufgrund bekannter Gesetzmäßigkeiten (Kesselformel) bei Aufgabe eines geeigneten Druckes die Bereiche mit größerem Durchmesser jeweils unterhalb der Elemente zu plastifizieren, während die Bereiche kleineren Durchmessers dem gleichen Innendruck standhalten.

Im Zusammenhang mit der gewählten Formgebung des Rohrkörpers wird somit ein deutlich vereinfachtes Aufweitverfahren möglich, bei dem die Abdichtung auf die beiden Enden des Rohrkörpers beschränkt ist. Wenn eines der zunächst offenen Enden des Rohrkörpers mit einem Stopfen verschlossen ist, kann insbesondere in vertikaler Lage das ganze Rohr blasenfrei mit Druckflüssigkeit gefüllt werden und anschließend der Druck durch einen üblichen Druckerzeuger erhöht werden. Anstelle des bisher in der Regel verwendeten Wassers als Druckflüssigkeit kann auch eine wachsartige Masse oder dergleichen Verwendung finden. Die Druckerzeugung kann in einfacher Weise dadurch geschehen, daß ein Stempel in das eine offene Rohrende oder zwei entgegengesetzte Stempel in beide offenen Rohrenden eingeführt werden, nachdem die Druckflüssigkeit den Innenraum des Rohres vollständig ausfüllt.

Grundsätzlich ist das erfindungsgemäße Verfahren auch bei Wellen anwendbar, die nicht über zusätzliche Hülsen größeren Durchmessers zwischen den Elementen verfügen, sondern bei denen bereits der kleinere Durchmesser der Zwischenbereiche relativ groß gewählt werden kann, um die erforderliche Festigkeit zu erzielen. Vorrangiges Ziel dieser Bauform ist es aber, jeweils zwischen Rohrkörper und Element festzulegende Hülsen vergrößerten Durchmessers vorzusehen, die eine deutlich erhöhte Torsions- und Biegesteifigkeit aufgrund der größeren Widerstandsmomente gegenüber dem Rohrkörper geben. Damit kann eine erhebliche Gewichtseinparung bei gleichzeitiger Beibehaltung oder sogar Vergrößerung der Verformungssteifigkeit im Vergleich zu bisher bekannten Ausführungsformen erzielt werden. Der gewichtsreduzierte Rohrkörper kann hierdurch die Rolle eines reinen Hilfsmittels zum Festlegen der Elemente auf den Hülsen übernehmen. Statt einer einfachen Hülse können, wie vorbeschrieben, Hülsen in zweischaliger Bauweise verwendet werden. In einer ersten günstigen Ausführungsform sind die Hülsen jeweils zwischen den Elementen gegenüber den Bereichen des Rohrkörpers, auf denen die Elemente festgelegt sind, nochmals vergrößert. Hierbei ist in der Regel eine Teilung der Hülsen vorzusehen, die dann unter den Elementen aneinander stoßen oder ineinander geschoben sind. Nach einer zweiten Ausgestaltung, die auch mit der zuvor genannten kombiniert werden kann, sind als Hülsen insbesondere durchgehende Rohrstücke gleichbleibenden Durchmessers vorgesehen. Werden diese alleine verwendet, beinhaltet dieses einen Verzicht auf höhere Widerstansmomente, dagegen sind aufgrund der Einstückigkeit und der Tatsache, daß keine Umformung an den Hülsen erfolgen muß, fertigungstechnisch Vorteile zu erzielen. Bei besonders leichter Bauweise der Hülsen können einzelne festgelegte Elemente als glatte Lagerhülsen ausgebildet sein; bei geeigneter Auswahl des Hülsenwerkstoffes und entsprechender Wärmebehandlung können die Hülsen jeweils zwischen zwei Elementen selber Lagerbereiche bilden. In bevorzugter Ausgestaltung sind jeweils die Übergangsbereiche von den Rohrabschnitten größeren Durchmessers zu den Rohrabschnitten kleineren Durchmessers konisch ausgebildet, um die gleichmäßige radiale Verformung der Rohrbereiche größeren Durchmessers an den Randbereichen weniger zu behindern.

Zwei bevorzugte Ausführungsbeispiele der Erfindung sind in den Zeichnungen dargestellt.
- Fig. 1: zeigt eine aufgebaute Welle mit geteilten, abgestuften Hülsen.
- Fig. 2: zeigt eine aufgebaute Welle mit einer durchgehenden Hülse gleichbleibenden Durchmessers.

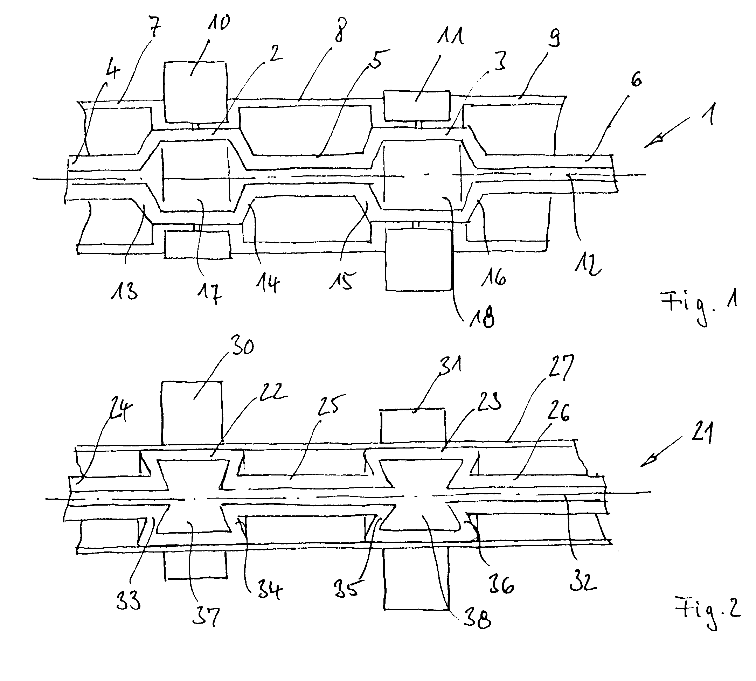

In Figur 1 ist ein Rohrkörper 1 dargestellt, der Bereiche größeren Durchmessers 2,3 und dazwischenliegende Abschnitte reduzierten Durchmessers 4, 5, 6, aufweist. Auf den Rohrkörper sind abgestufte Hülsen 7, 8, 9, aufgeschoben, die zwischen den Abschnitten 2 und 3 des Rohrkörpers und den darauf festgelegten Antriebselementen 10, 11, eingespannt sind. Die Übergangsbereiche 13, 14, 15, 16, von den Abschnitten größeren Durchmessers 2, 3 zu den Abschnitten kleineren Durchmessers 4, 5, 6, sind bezüglich der Antriebselemente 10, 11, nach außen konisch. In diesen Übergangsbereichen geht die Innenbohrung 12 des Rohrkörpers 1 in Innenräume 17, 18 über, die bei einer Druckbeaufschlagung des Rohres plastisch umgeformt werden, um eine bleibende elastische Vorspannung in den Antriebselementen 10, 11 zur formschlüssigen Verbindung zu erzeugen. Der Rohrkörper kann durch plastisches Umformen einstückig erzeugt werden. Es ist auch sinnvoll, die Durchmesser- und Wanddickenabstufungen des Rohrkörpers durch Zusammenfügen aus Einzelteilen (z.B. Schweißen, Löten) herzustellen.

In Figur 2 ist ein Rohrkörper 21 dargestellt, der Längsabschnitte 22, 23 größeren Durchmessers und dazwischenliegende Abschnitte 24, 25, 26 kleineren Durchmessers aufweist. Auf die Bereiche größeren Durchmessers ist eine einzige durchgehende Hülse 27 in einstückiger Ausgestaltung aufgeschoben, die durch das hydraulische Aufweiten der Abschnitte 22, 23 des Rohrkörpers unter aufgeschobenen Antriebselementen 30, 31 eingespannt ist. Übergangsbereiche 33, 34, 35, 36 des Rohrkörpers von den Bereichen 24, 25, 26 geringeren Durchmessers zu den Bereichen 22, 23 größeren Durchmessers sind bezüglich der Antriebselemente 30, 31 nach innen konisch eingezogen. An diesen Übergangsbereichen geht die Innenbohrung 32 des Rohrkörpers 21 in Rohre 37, 38 über, die bei einer inneren Druckbeaufschlagung in ihrem Mantel plastisch gegen die elastische Vorspannung der Antriebselemente verformt werden.

### Bezugszeichenliste

- 1: Rohrkörper
- 2: Rohrabschnitt (großer Durchmesser)
- 3: Rohrabschnitt (großer Durchmesser)
- 4: Rohrabschnitt (kleiner Durchmesser)
- 5: Rohrabschnitt (kleiner Durchmesser)
- 6: Rohrabschnitt (kleiner Durchmesser)
- 7: Hülse
- 8: Hülse
- 9: Hülse
- 10: Antriebselement (Nocken)
- 11: Antriebselement (Nocken)
- 12: Bohrung
- 13: Übergangskonus
- 14: Übergangskonus
- 15: Übergangskonus
- 16: Übergangskonus
- 17: Innenraum
- 18: Innenraum
- 21: Rohrkörper
- 22: Rohrabschnitt (großer Durchmesser)
- 23: Rohrabschnitt (großer Durchmesser)
- 24: Rohrabschnitt (kleiner Durchmesser)
- 25: Rohrabschnitt (kleiner Durchmesser)
- 26: Rohrabschnitt (kleiner Durchmesser)
- 27: Hülse
- 28: Hülse
- 29: Hülse
- 30: Antriebselement (Nocken)
- 31: Antriebselement (Nocken)
- 32: Bohrung
- 33: Übergangskonus
- 34: Übergangskonus
- 35: Übergangskonus
- 36: Übergangskonus
- 37: Innenraum
- 38: Innenraum

## Patentansprüche

1. Verfahren zum Herstellen einer aufgebauten Welle, insbesondere Nockenwelle, Getriebewelle oder Kurbelwelle, mit zumindest einem Rohrkörper (1; 21) und mehreren darauf mit Abstand zueinander durch in Längsabschnitten vollzogenes Aufweiten desselben kraftschlüssig festgelegten Elementen (10, 11; 30, 31), wie Nocken, Zahnrädern, Lagerhülsen oder Kurbelwangen, wobei der Rohrkörper (1; 21) bereits vor seiner Verformung bei etwa gleichbleibender Wandstärke axial gesehen jeweils im Bereich zwischen zwei Elementen mit einem reduzierten Durchmesser versehen wird, dadurch gekennzeichnet, daß der Rohrkörper (1; 21) nach dem Ineinanderstecken der Antriebselemente (10, 11; 30, 31) der Hülsen (7, 8, 9; 27) und des Rohrkörpers (1; 21) insgesamt mit einem Innendruck beaufschlagt wird, der die Bereiche geringeren Durchmessers (4, 5, 6, 24, 25, 26) zwischen den Elementen (10, 11; 30, 31) ausschließlich elastisch und die Bereiche unter den Elementen (10, 11; 30, 31) jeweils plastisch zur Erzeugung einer bleibenden Vorspannung gegenüber den Elementen (10, 11, 30; 31) und gegebenenfalls den Hülsen (7, 8; 9, 27) umformt.

2. Verfahren nach Anspruch 1, dadurch gekennzeichnet, daß die Hülsen (7, 8, 9, 27) vor dem Verbinden wärmebehandelt, insbesondere vergütet und randschichtgehärtet werden.

## Claims

1. A process for producing a built-up shaft, in particular a camshaft, a transmission shaft or a crankshaft, having at least one tubular body (1; 21) and a plurality of elements (10, 11; 30, 31) such as cams, gear wheels, bearing sleeves or crank webs which are force-lockingly feed on the tubular body at a spacing relative to each other by expansion of the tubular body which is effected in longitudinal portions, wherein prior to its being deformed the tubular body (1; 21) is already provided with a reduced diameter with approximately uniform wall thickness as viewed axially in the respective regions between each two elements, characterized in that after the drive elements (10, 11; 30, 31), the sleeves (7, 8, 9; 27) and the tubular body (1; 21) are fitted one into the other the tubular body (1; 21) is overall subjected to an internal pressure which exclusively elastically deforms the smaller-diameter regions (4, 5, 6, 24, 25, 26) between the elements (10, 11; 30, 31) and plastically deforms the regions under the elements (10, 11; 30, 31), to produce a permanent prestressing relative to the elements (10, 11, 30; 31) and possibly the sleeves (7, 8; 9, 27).

2. A process according to claim 1 characterised in that the sleeves (7, 8, 9, 27) are heat-treated prior to the connection operation, in particular tempered and surface-hardened.

## Revendications

1. Procédé de fabrication d'un arbre en plusieurs pièces, notamment un arbre à cames, un arbre de transmission ou un vilebrequin, avec au moins un corps tubulaire (1 ; 21), et avec plusieurs éléments (10, 11 ; 30, 31), tels que des cames, des roues dentées, des douilles de palier ou des joues de vilebrequin, fixés par adhérence à distance les uns des autres sur le corps tubulaire, au moyen d'un élargissement du corps tubulaire qui est accompli par tronçons longitudinaux, le corps tubulaire (1 ; 21) étant, dès avant sa déformation et en laissant l'épaisseur de paroi approximativement inchangée, vu axialement, doté d'un diamètre réduit dans chaque région située entre deux éléments, **caractérisé** en ce qu'après avoir mutuellement emboîté les éléments d'entraînement (10, 11 ; 30, 31), les douilles (7, 8, 9 ; 27) et le corps tubulaire (1 ; 21), le corps tubulaire (1 ; 21) est globalement sollicité par une pression intérieure qui déforme exclusivement élastiquement les régions de diamètre inférieur (4, 5, 6 ; 24, 25, 26) situées entre les éléments (10, 11 ; 30, 31), et plastiquement les régions respectives situées en-dessous des éléments (10, 11 ; 30, 31), afin de produire une précontrainte permanente vis-à-vis des éléments (10, 11 ; 30, 31) et, le cas échéant, des douilles (7, 8, 9 ; 27).

2. Procédé selon la revendication 1, **caractérisé** en ce que les douilles (7, 8, 9 ; 27) sont traitées thermiquement avant l'assemblage, en étant notamment soumises à un revenu et une trempe superficielle.
